# EUROPEAN PATENT APPLICATION

(11) **EP 4 425 808 A1**
(43) Date of publication of application: **04.09.2024**
(21) Application number: 21962555.5
(22) Date of filing: 27.10.2021
(51) Int. Cl.: H04L 1/18, H04L 1/00, H04L 1/16, H04W 28/04, H04W 88/04, H04W 4/80, H04R 5/04

(54) **WIRELESS EARBUD SYSTEM AND OPERATION METHOD THEREOF**

(71) Applicant: LG Electronics Inc., Yeongdeungpo-gu Seoul 07336 (KR)
(72) Inventor: PAIK, Bongkyu, Seoul 06772 (KR); JEONG, Byounghak, Seoul 06772 (KR); LEE, Kihoon, Seoul 06772 (KR); YANG, Giwon, Seoul 06772 (KR)
(74) Representative: Frenkel, Matthias Alexander
(86) International application number: PCT/KR2021/015186
(87) International publication number: WO 2023/074929

(57) **Abstract**

The present disclosure provides a wireless earbud system and an operation method thereof, the wireless earbud system minimizing the frequency of occurrence of data delay between earbuds and the delay time, and minimizing battery consumption. The wireless earbud system comprises: a source device; a first sink device receiving audio data from the source device; and a second sink device snooping the audio data transmitted from the source device, wherein, if there is data failed to be snooped by the second sink device, the first sink device may transmit a relay packet to the second sink device such that a data relay is performed.

## Description

### [Technical field]

The present disclosure relates to a wireless earbud system and a method of operating the same. More specifically, it relates to a data transmission method in a wireless earbud system.

### [Background]

The number of users using wireless earbuds instead of wired earphones is rapidly increasing due to the development of communication technology, miniaturization and improvement of battery capacity, etc. In other words, the use of True Wireless Stereo (TWS) is increasing.

The wireless earbud system consists of a source device such as a smartphone and at least one earbud that receives a sound source from the source device. In particular, the earbud is generally composed of two bars, preferably worn on the left and right sides, one of which is the master earbud, which receives sound directly from the source device, and the other is the slave earbud, which operates by snooping on the sound source received by the master earbud from the source device.

On the other hand, if the slave earbud does not receive some data, data relay may be required, but in this case, there is a delay and unnecessary battery consumption.

### [Technical object]

The present disclosure is to provide a wireless earbud system and a method of operating the same that minimize the frequency and delay time of data relay between earbuds and minimize battery consumption.

The present disclosure is to provide a wireless earbud system and a method of operating the same that define a separate packet to enable a master earbud to determine data that failed to snoop in a slave earbud.

### [Technical solution]

The wireless earbud system according to an embodiment of the present disclosure can perform data relay by a master earbud selectively transmitting only data that failed to snoop from a slave earbud.

A wireless earbud system according to an embodiment of the present disclosure includes a source device; a first sink device configured to receive audio data from the source device; and a second sink device configured to snoop audio data transmitted from the source device, wherein the first sink device is configured to transmit relay packets to the second sink device to perform a data relay operation when there is data that fails to snoop in the second sink device.

A control link for transmitting and receiving the relay packet between the first sink device and the second sink device is formed.

The first sink device is configured to transmit a start control packet containing reception status information of ACL data received from the source device to the second sink device, and to receive a reply control packet containing reception status information of the ACL data snooped by the second sink device from the second sink device.

The the first sink device is configured to determine whether the data relay operation is necessary by comparing the ACL data received from the source device and the ACL data received by the second sink device through the reply control packet.

When the data relay operation is necessary, the first sink device is configured to transmit a relay packet carrying data that the second sink device is failed to snoop in an ACL data buffer to the second sink device.

The first sink device is configured to transmit an end packet to the second sink device when the data relay operation is not necessary.

The first sink device is configured to transmit an end packet to the second sink device when the data relay operation is completed.

The relay packet is configured of a payload that the first sink device receives from the source device.

A LLID value of the payload included in the start control packet is 0.

The the first sink device is configured to perform an ACL link operation to receive an ACL data packet transmitted from the source device during a predetermined period, the second sink device is configured to perform the snooping link operation to receive the ACL data packet while the first sink device performs the the ACL link operation, and the first sink device and the second sink device is configured to switch to a TWS control link operation when the reception operation for the ACL data packet is completed.

The first sink device communicates with the source device through Bluetooth, and the first sink device communicates with the second sink device through Bluetooth.

The first sinkc device communicates with the source device through Bluetooth, and the first sink device communicates with the second sink device through UWB.

The first sink device is configured to transmit a message on the success/failure of receiving the ACL data to the source device through the Bluetooth communication, and to simultaneously transmit a message on the success/failure of snooping of the second sink device from the second sink device.

The the second sink device includes a first media data determiner configured to determine whether the received data is the first data, a duplicate reception determiner configured to determine whether the received data is the same as the previously received data or the received data is currently stored in a reordering buffer, when the received data is not the first data, an upper layer transmission determiner configured to transmit a sequence number of the received data to an upper layer by comparing with an expected sequence number, when the received data is the first data or is not duplicate received data, a flush reordering buffer determiner configured to transmit the sequence number of the received data to the upper layer by determining whether the sequence number of the received data matches all expected sequence numbers in the reordering buffer.

A method of operating a wireless earbud system according to an embodiment of the present disclosure includes transmitting audio data from a source device to a first sink device; receiving, by the first sink device, the audio data from the source device; snooping, by a second sink device, audio data transmitted from the source device; and transmitting, by the first sink device, a relay packet to the second sink device to perform a data relay operation when there is data that failed to snoop in the second sink device.

### [Effects of the Invention]

According to an embodiment of the present disclosure, a master earbud can perform data relay by selectively transmitting only data that has not been received by a slave earbud, thereby minimizing the frequency of relay and delay time, thereby improving battery efficiency.

### [Brief description of the Drawings]

FIG. 1 is a schematic diagram of a wireless earbud system according to an embodiment of the present disclosure.
FIG. 2 is a diagram illustrating an example of a TWS Control/Relay Packet format transmitted and received between earbuds in a wireless earbud system according to an embodiment of the present disclosure.
FIG. 3 is a diagram illustrating a payload format of a TWS Initial Control Packet according to an embodiment of the present disclosure.
FIG. 4 is a diagram illustrating a payload format of a TWS Start Control Packet according to an embodiment of the present disclosure.
FIG. 5 is a diagram illustrating a payload format of a TWS Reply Control Packet according to an embodiment of the present disclosure.
FIG. 6 is a diagram illustrating a payload format of a TWS End Control Packet according to an embodiment of the present disclosure.
FIG. 7 is a flowchart illustrating a method of operation when data relay of the wireless earbud system is not required according to an embodiment of the present disclosure.
FIGS. 8 and 9 are flowcharts illustrating an operation method when data relay of a wireless earbud system is required according to an embodiment of the present disclosure.
FIG. 10 is a control block diagram of an earbud slave device according to an embodiment of the present disclosure.
FIG. 11 is a flowchart illustrating a method in which an earbud slave device determines and operates duplicate reception of ACL data packets according to an embodiment of the present disclosure.
FIG. 12 is a flow chart illustrating a process for forming a TWS control link between a master earbud and a slave earbud according to an embodiment of the present disclosure.
FIGS. 13 and 14 are flowcharts illustrating a connection and information exchange method between earbuds according to an embodiment of the present disclosure.
FIG. 15 is a flowchart illustrating a method of normally transmitting and receiving data using heterogeneous link technology in a wireless earbud system according to an embodiment of the present disclosure.
FIG. 16 is a diagram illustrating data transmission/reception and Ack timing diagrams according to FIG. 15.
FIG. 17 is a flowchart illustrating a case where only the master earbud fails to receive data when using heterogeneous link technology in another wireless earbud system according to an embodiment of the present disclosure.
FIG. 18 is a diagram illustrating data transmission/reception and Ack timing diagrams according to FIG. 17.
FIG. 19 is a flowchart illustrating a case where only the slave earbud does not receive data when using heterogeneous link technology in another wireless earbud system according to an embodiment of the present disclosure.
FIG. 20 is a diagram illustrating data transmission/reception and Ack timing diagrams according to FIG. 19.
FIG. 21 is a flowchart illustrating a case in which both the master earbud and the slave earbud fail to receive data when using heterogeneous link technology in a wireless earbud system according to an embodiment of the present disclosure.
FIG. 22 is a diagram illustrating data transmission/reception and Ack timing diagrams according to FIG. 21.
FIG. 23 is a diagram illustrating packet capture with an air sniffer device when data relay is not required in a wireless earbud system according to an embodiment of the present disclosure.
FIG. 24 is a diagram illustrating packet capture with an air sniffer device when data relay is required in a wireless earbud system according to an embodiment of the present disclosure.

### [Best mode]

Hereinafter, embodiments related to the present invention will be described in more detail with reference to the drawings. The suffixes "module" and "part" for components used in the following description are given or used interchangeably only for the ease of preparing the specification and do not have distinct meanings or roles in themselves.

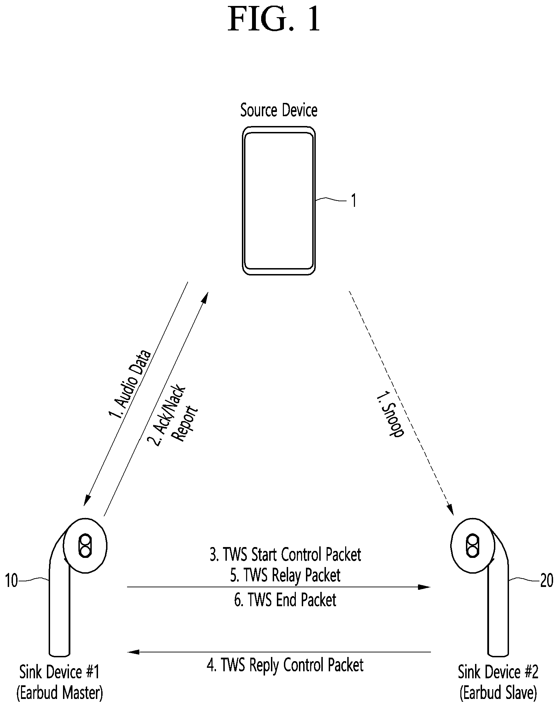

FIG. 1 is a schematic diagram of a wireless earbud system according to an embodiment of the present disclosure.

The wireless earbud system according to an embodiment of the present disclosure may consist of a source device 1 and a sink device, and the sink device may include a first sink device 10 and a second sink device 20. One of the first and second sink devices 10 and 20 may be a master earbud, and the other may be a slave earbud. In the present disclosure, it is assumed that the first sink device 10 is a master device and the second sink device 20 is a slave device, but this is only an example for convenience of explanation, so it is reasonable that it is not limited thereto.

FIG. 1 schematically explains an operational method of the wireless earbud system.

The source device 1 may transmit audio data to the first sink device 10. The first sink device 10 can receive audio data from the source device 1. The first sink device 10 may transmit a message such as ACK or NACK to the source device 1 depending on the reception status of audio data. When the first sink device 10 receives audio data normally, an ACK message is transmitted to the source device 1, and when the first sink device 10 does not receive audio data normally, a NACK message is transmitted to the source device 1.

Meanwhile, the second sink device 20 may snoop the audio data transmitted from the source device 1 to the first sink device 10. Snooping may refer to an act of intercepting data on a network.

Through this operation, the first sink device 10 and the second sink device 20 can obtain data from the source device 1 for a predetermined period.

Thereafter, the first and second sink devices 10 and 20 can share data reception status information from the source device 1 using a TWS control packet. Specifically, the TWS control packet may include a TWS Start control packet and a TWS Reply control packet. When the first sink device 10 transmits the TWS Start Control Packet to the second sink device 20, the second sink device 20 can transmit the TWS Reply Control Packet to the first sink device 10, data reception status information can be exchanged. An LLID value in the payload of the start control packet may be 0.

The first sink device 10 may transmit the start control packet containing reception status information of the ACL data received from the source device 1 to the second sink device 20, and receive the reply control packet containing reception status information of the ACL data snooped by the second sink device 20 from the second sink device 20.

The first sink device 10 may determine whether to perform data reply based on data reception status information received from the second sink device 20. The first sink device 10 may determine whether a data relay operation is necessary by comparing the ACL data received from the source device 1 and the ACL data received by the second sink device 20 through the reply control packet.

The first sink device 10 may selectively control the second sink device 20 to perform data relay based on the data relay decision. The first sink device 10 may transmit a TWS Relay Packet to the second sink device 20 so that the second sink device 20 performs data relay. When a data relay operation is necessary, the first sink device 10 may transmit a relay packet carrying data that the second sink device 20 failed to snoop in the ACL data buffer to the second sink device 20. The TWS relay packet may include a packet payload in which the second sink device 20 failed to snoop. The TWS relay packet may consist of a payload received by the first sink device 10 from the source device 1.

When a TWS relay packet is received, the second sink device 20 may transmit a null packet in response, and the null packet may include an ACK message.

The first sink device 10 may transmit all TWS relay packets that need to be data relayed, and upon receiving an ACK message in response, generate a TWS End Packet and transmit it to the second sink device 20. That is, the first sink device 10 may transmit an end packet to the second sink device 20 when the data relay operation is not necessary or when the data relay operation is completed.

According to this, the first sink device 10 may selectively perform data relay only for data that the second sink device 20 failed to snoop, thereby improving delay time and minimizing the data relay operation compared to a method in which data relay is performed at the source device 1, and thereby having the advantage of minimizing battery consumption.

Accordingly, in the present disclosure, when there is data that failed to snoop in the second sink device 10, the first sink device 10 can transmit a relay packet to the second sink device 20 to perform a data relay operation. Additionally, a control link for transmitting and receiving relay packets can be formed between the first sink device 10 and the second sink device 20.

The control link may be a TWS Control Link. TWS Control Link can apply its own operation protocol and its own access code generation method to the TWS Control/Relay Packet, and can strengthen the security of TWS Control Link operation between earbuds.

Next, packets transmitted and received in the wireless earbud system 1 according to an embodiment of the present disclosure will be described in detail.

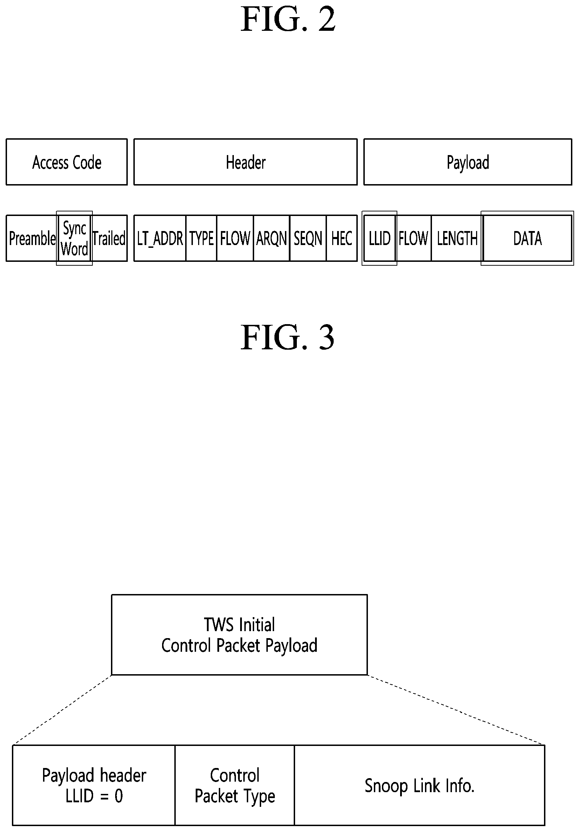

FIG. 2 is a diagram illustrating an example of the TWS Control/Relay Packet format transmitted and received between earbuds in a wireless earbud system according to an embodiment of the present disclosure.

The wireless earbud system 1 according to an embodiment of the present disclosure may generate the TWS control link between earbuds according to its own protocol method proposed in the present disclosure, and transmit/receive the TWS Control/Relay packet for exchanging control information between earbuds in the generated TWS control link.

The TWS control link may be its own control link for exchanging the TWS control packets and TWS relay packets between earbuds. In addition, in the present disclosure, the TWS control packet can be defined to exchange control information for controlling the data reception status from the source device 1 and the snooping link of the second sink device 20.

The TWS Control/Relay packet may have the format shown in FIG. 2. Specifically, the TWS Control/Relay packet is generated by its own protocol method proposed in the present disclosure in the DATA area of the Payload for TWS control packets with LLID = 0 using Undefined Value (0) among the LLID Field values, and the Access Code by generating a Sync Word Field using the protocol method proposed in the present disclosure, the possibility of conflict between the TWS Control Link operation between earbuds and the standard ACL Link operation can be excluded and the security of the TWS Control Link operation between earbuds can be strengthened.

The format of the TWS control packet is described in detail as follows.
- Only connection with our products is allowed, and in order to strengthen security and prevent an Access Code Detection False Alarm, a generating method of the Sync Word of the Access Code does not follow the Bluetooth standard, but can be generated using our own method.
- The LLID value of the payload can be distinguished from the LMP and ACL Data Packet presented in the BlueTooth standard by using the value LLID = 0, which is not used in the standard (avoiding collisions with LMP/ACL Link related operations).
- Using the TWS Control Packet with LLID = 0, the TWS Control Link control operation is performed according to the protocol method defined by the controller.
- Improvements in delay time can be achieved by quickly processing TWS control packet transmission and reception operations and subsequent TWS control link control operations in the controller.
- The DATA Field of Payload consists of information defined for each TWS Control Packet so that the TWS control link can be controlled according to the self-defined protocol.

The format of the TWS relay packet is described in detail as follows.
- Only connection with our products is allowed, and in order to strengthen security and prevent an Access Code Detection False Alarm, a generating method of the Sync Word of the Access Code does not follow the Bluetooth standard, but is created using our own method.
- The payload part consists of the same information of the payload of the ACL data packet received by the first sink device 10 from the source device 1 for the ACL (Asynchronous Connection-Less) data packet that failed to snoop in the second sink device 20.

The Sync Word creation method can be as follows.
- Generate a Sync Word by inverting the local/global bits of the Bluetooth device address used as input to generate a Sync Word from their original values.

Hereinafter, the payload format of the TWS control packet and TWS relay packet will be described in detail.

FIG. 3 is a diagram illustrating the payload format of a TWS Initial Control Packet according to an embodiment of the present disclosure.

The TWS initial control packet may represent a TWS control packet initially transmitted from the first sink device 10 to the second sink device 20.

The TWS initial control packet may include ACL link information and timing information between the first sink device 10 and the source device 1 for the second sink device 20 to snoop the source device 1.

The payload format of the TWS Initial Control Packet may be as shown in FIG. 3. That is, the payload of the TWS initial control packet has a value of a header LLID that is 0 and may include a control packet type and snooping link information. In this case, the snooping link information may include the following information.
- ACL link information formed between the source device 1 and the first sink device 10
- The last RxSequN, RxArqN, and Rx Payload counter information of the first sink device 10
- Clock offset and slot boundary offset information between the source device 1 and the first sink device 10

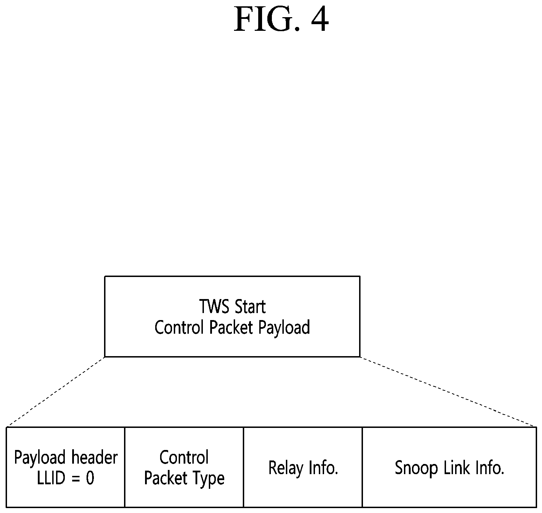

FIG. 4 is a diagram illustrating the payload format of a TWS Start Control Packet according to an embodiment of the present disclosure.

The TWS start control packet may represent a TWS control packet transmitted from the first sink device 10 to the second sink device 20 after the TWS initial control packet. The TWS start control packet may be a packet that transmits ACL data reception status information received from the source device 1 by the first sink device 10 to the second sink device 20.

The payload format of the TWS start control packet may be as shown in FIG. 4. That is, the payload header LLID of the TWS start control packet is 0 and may include control packet type, relay information, and snooping link information. In this case, the relay information may include the following information.
- TWS Control Session Number
   - SEQ_NUM: the number of cumulative ACE data successfully received from the source device 10
- PKT_CNT: the number of successfully received ACL data during the previous source device reception section
   - LMP/ACL Tx Data Pending Flag: Flag indicating that there is LMP/ACL Tx Data pending from the first sink device 10
      And, snooping link information may include the following information.
   - RxSeqN, RxArqN, Rx Payload Counter: Parameters that the second sink device 20 should use when receiving ACL data from the next Snoop Link
- AFH Channel Map: When the AFH Channel Map is changed, it is transmitted to the second sink device 20

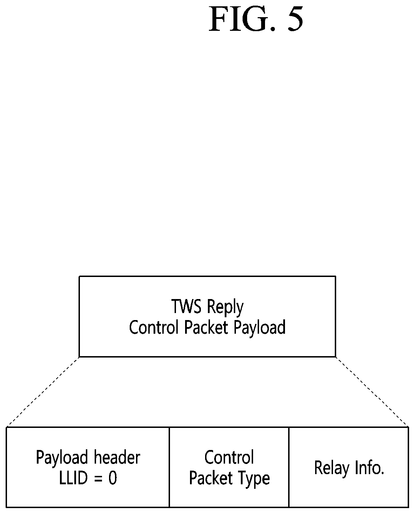

FIG. 5 is a diagram illustrating the payload format of a TWS Reply Control Packet according to an embodiment of the present disclosure.

The TWS reply control packet may be a packet that transmits reception status information of the ACL data snooped by the second sink device 20 from the source device 1 to the first sink device 10.

The payload format of the TWS Reply Control Packet may be as shown in FIG. 5. That is, the payload header LLID of the TWS reply control packet is 0, and may include control packet type and relay information. In this case, the relay information may include the following information.
- TWS Control Session Number
- SEQ_NUM: the number of accumulated ACL data successfully snooped from source device 1
- PKT_CNT: the number of successfully received ACL data during the previous source device snooping section
- LMP/ACL Tx Data Pending Flag: Flag indicating that there is LMP/ACL Tx Data pending in the second sink device 20

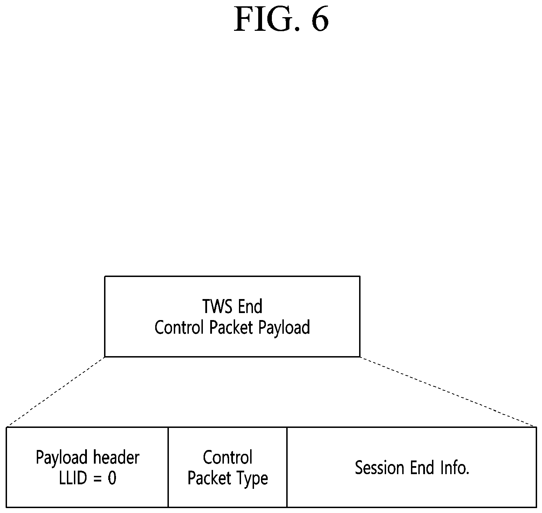

FIG. 6 is a diagram illustrating the payload format of a TWS End Control Packet according to an embodiment of the present disclosure.

The TWS end control packet may be a packet that transmits to the second sink device 20 that the first sink device 10 does not need data relay or that the data relay operation is completed.

The payload format of the TWS end control packet may be as shown in FIG. 6. That is, the payload header LLID of the TWS end control packet is 0, and may include control packet type and session end information. In this case, session end information may include the following information.
- TWS Control Session Number
- No Data Replay Action Flag: Flag indicating that data relay operation is not necessary
- Ongoing ACL Action Flag: Flag indicating that ACL link operation between earbuds is required after following termination of TWS control link operation.

Meanwhile, the TWS relay packet is a packet that transmits from the first sink device 10 to the second sink device 20 to perform a selective data relay operation for data that the second sink device 20 failed to snoop.

Specifically, after receiving the TWS reply control packet from the second sink device 20, the first sink device 10 may determine whether data relay operation of the second sink device 20 is necessary based on its own relay information and the relay information received from the second sink device 20. The first sink device 10 can determine that data relay operation is not necessary in case a first case where the SEQ_NUM of the second sink device 20 is greater than or equal to that of the first sink device 10 and a second case where PKT_NUM of the second sink device 20 is greater than or equal to that of the first sink device 10 are satisfied. Meanwhile, the first sink device 10 may determine that a data relay operation is necessary if either of the first and second cases described above is not satisfied.

When it determines that a data relay operation is necessary, the first sink device 10 can transmit TWS relay packet containing data not snooped by the second sink device 20 in the reception ACL data buffer stored in the first sink device 10 to the second sink device 20. The second sink device 20 can perform a selective data relay operation using TWS relay packets.

Next, an operational method of the wireless earbud system is described in detail. The wireless earbud system can selectively perform data relay.

The first sink device 10 can perform an ACL link operation to receive an ACL data packet transmitted from the source device 1 during a predetermined period, the second sink device 20 can perform a snooping link operation to receive the ACL data packet while the first sink device 10 is performing an ACL link operation, and when the first sink device 10 and the second sink device 20 complete the reception operation for the ACL data packet, the TWS Control link operation can be switched.

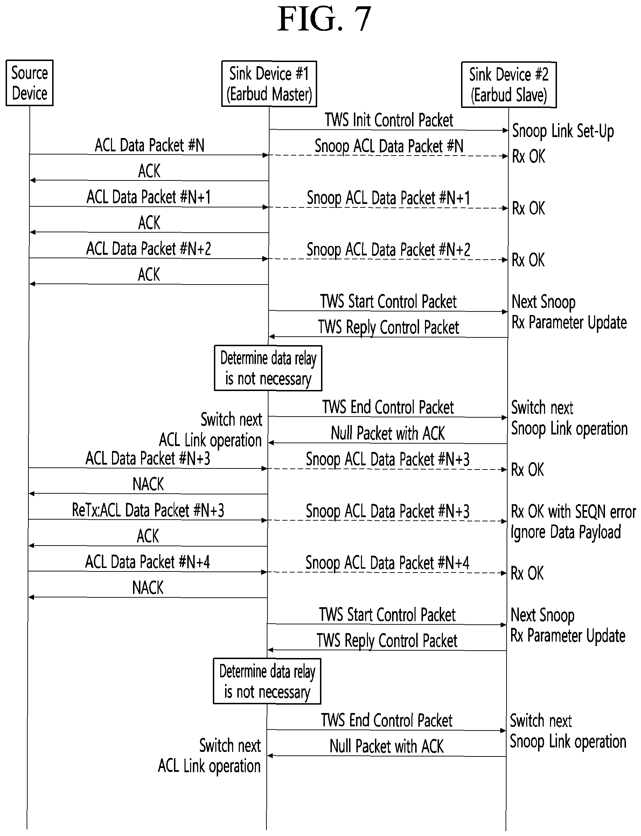

FIG. 7 is a flowchart illustrating a method of operation when data relay of the wireless earbud system is not required according to an embodiment of the present disclosure.

First, a TWS Control Link can be formed between the master earbud and the slave earbud. That is, the TWS control link can be formed between the first sink device 10 and the second sink device 20.

After forming the TWS control link, the second sink device 20 can receive the TWS initial control packet and the snooping link parameters required for configuring the snooping link through the TWS initial control packet from the first sink device. The second sink device 20 may perform a snooping link setup procedure through the snooping link parameter. Accordingly, the second sink device 20 can form a snooping link.

The first sink device 10 and the second sink device 20 may attempt to receive an ACL data packet transmitted from the source device 1 during a predetermined period.

Specifically, the first sink device 10 can feed back the ACK/NACK result to the source device 1 for success/failure in receiving the ACL data packet and update the reception status information of the ACL data packet to configure of relay information transmitted in the TWS start control packet.

Then, the second sink device 20 can perform a snooping operation on the ACL data packet from the source device 1 and update status information of the ACL data packet to configure relay information transmitted in the TWS reply control packet.

When the first sink device 10 and the second sink device 20 complete the reception operation for the ACL data packet transmitted from the source device 1 for a predetermined period, the TWS control link operation can be switched.

Specifically, the first sink device 10 may generate payload information of a TWS start control packet and transmit the generated packet to the second sink device 20. The second sink device 20 may generate payload information of a TWS reply control packet, and transmit a TWS reply control packet to the first sink device 10 in response to receiving the TWS start control packet from the first sink device 10. The second sink device 20 may update Rx parameters (ARQN, SEQN, Payload counter, AFH Channel Map) information for the reception operation of the next snooping link according to the snooping information of the received TWS start control packet.

The first sink device 10 may receive the TWS reply control packet transmitted from the second sink device 20, and determine whether there is data which is failed to snoop by the second sink device 20 based on the relay information of the corresponding payload.

The first sink device 10 may determine that data relay is not necessary if there is no data that failed snooping, and may determine that data relay is necessary if there is data that failed to snoop.

In the case of FIG. 7, it is assumed that the first sink device 10 determines data relay is not necessary because there is no data for which the second sink device 20 failed to snoop.

The first sink device 10 may determine that data relay is not necessary, generate a payload of a TWS end control packet, and transmit the generated packet to the second sink device 20.

The second sink device 20 may receive the TWS end control packet and determine that data relay operation is not necessary based on the no data relay required information (No Data Relay Action Flag information) among the payload information of the corresponding packet and switch to a snooping link operation for receiving ACL data packets from the source device 1.

When a null packet (including ACK) in response to the transmitted TWS end control packet is received, the first sink device 10 may terminate the TWS control link operation and switch to ACL link operation for receiving the ACL data packet from the source device 1.

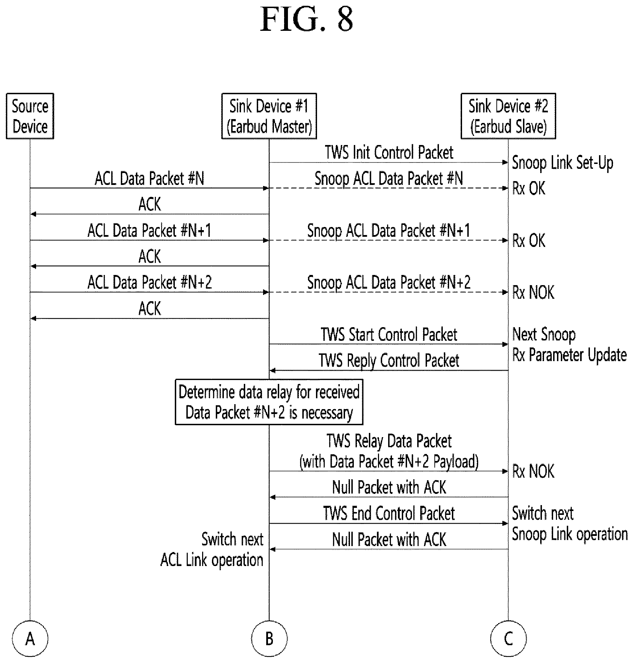

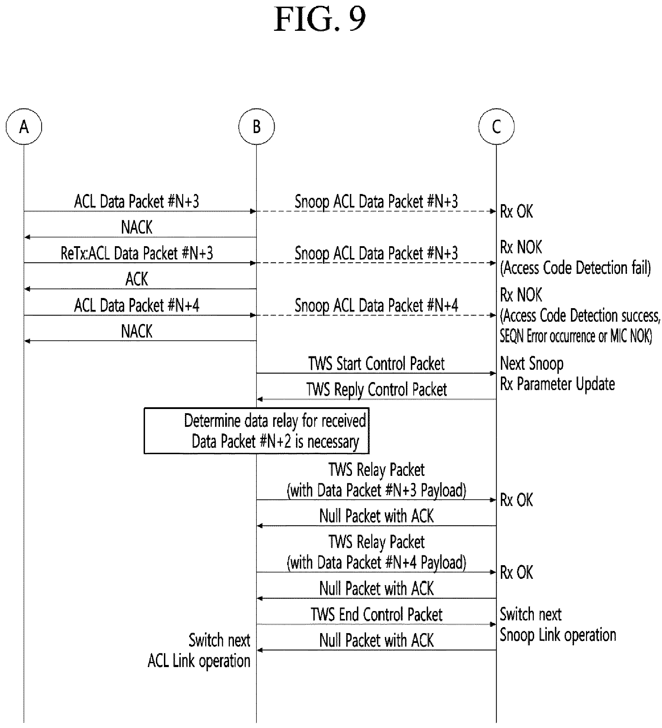

Next, FIGS. 8 and 9 are flowcharts illustrating an operation method when data relay of the wireless earbud system according to an embodiment of the present disclosure is required.

First, a TWS control link can be formed between the master earbud and the slave earbud. That is, a TWS control link can be formed between the first sink device 10 and the second sink device 20.

After forming the TWS control link, the second sink device 20 may receive a TWS initial control packet, and receive the snooping link parameters necessary for configuring the snooping link from the first sink device 10 through the TWS initial control packet. The second sink device 20 may perform a snooping link setting procedure through the snooping link parameter. Accordingly, the second sink device 20 can form a snooping link.

The first sink device 10 and the second sink device 20 may attempt to receive an ACL data packet transmitted from the source device 1 during a predetermined period.

Specifically, the first sink device 10 may feed back the ACK/NACK result to the source device 1 for success/failure in receiving the ACL data packet and update the reception status information of the ACL data packet to configure relay information transmitted in the TWS start control packet.

Then, the second sink device 20 may perform a snooping operation on the ACL data packet from the source device 1 and update reception status information of the ACL data packet to configure relay information transmitted in the TWS reply control packet.

When the reception operation for the ACL data packet transmitted from the source device 1 for a predetermined period is completed, the first sink device 10 and the second sink device 20 can switch to the TWS control link operation.

Specifically, the first sink device 10 may generate payload information of a TWS start control packet and transmit the packet to the second sink device 20. The second sink device 20 generates payload information of a TWS reply control packet, and sends a TWS reply control packet to the first sink device (10) in response to receiving the TWS start control packet from the first sink device 10. 10) can be transmitted. The second sink device 20 may update Rx parameters (ARQN, SEQN, Payload counter, AFH Channel Map) information for the reception operation of the next snooping link according to the snooping information of the received TWS start control packet.

The first sink device 10 may receive the TWS reply control packet transmitted from the second sink device 20, and, based on the relay information of the corresponding payload, determine whether there is data failed to snoop by the second sink device 20.

The first sink device 10 may determine whether a data relay operation is necessary based on the relay information having itself and the relay information transmitted by the second sink device 20. The first sink device 10 may determine whether there is data that the second sink device 20 failed to snoop on based on the relay information having itself and the relay information transmitted by the second sink device 20.

The first sink device 10 may determine that data relay is not necessary if there is no data that failed to snoop, and may determine that data relay is necessary if there is data that failed to snoop.

It is assumed that the first sink device 10 determines that data relay is necessary because there is data that the second sink device 20 failed to snoop on.

The first sink device 10 may determine that data relay is necessary and may transmit the snooping failed packet payload to the second sink device 20 carried in a TWS relay packet.

The second sink device 20 may perform data relay based on the received TWS relay packet.

The second sink device 20 may transmit a null packet (including ACK) to the first sink device 10 in response to the received TWS relay packet.

After completing transmission of all TWS relay packets to be data relay and reception ACK in response, the first sink device 10 may generate a payload of a TWS end control packet, and transmit the generated packet to the second sink device 20.

When the TWS end control packet is received, the second sink device 20 may recognize that the data relay operation is no longer necessary and switch to a snooping link operation to receive the ACL data packet from the source device 1.

When a null packet (including ACK) is received in response to the transmitted TWS end control packet, the first sink device 10 may terminate the TWS control link operation and switch to ACL link operation for receiving the ACL data packet from the source device 1.

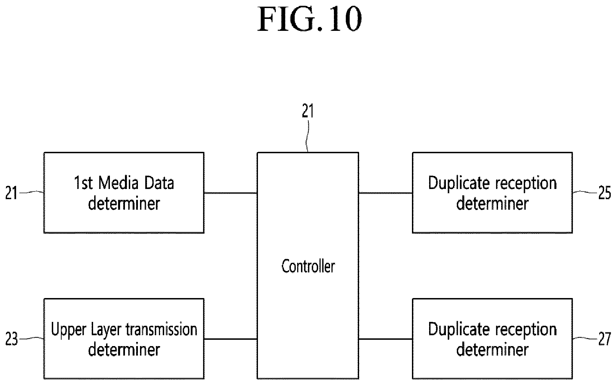

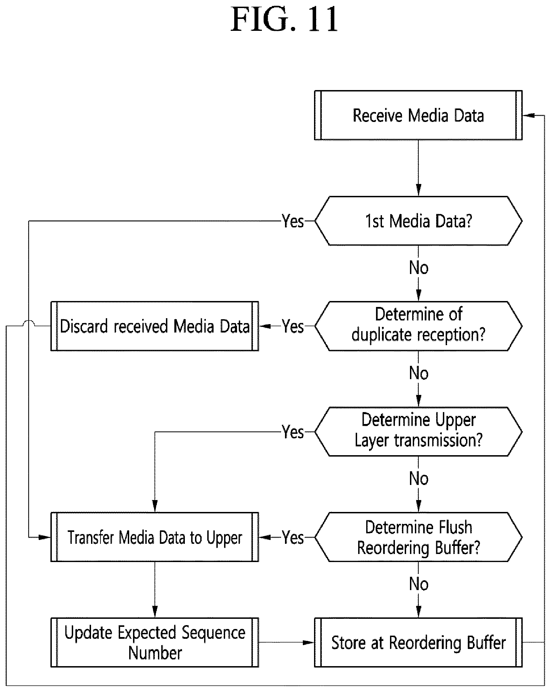

Next, referring to FIGS. 10 and 11, when the second sink device 20 receives the same data repeatedly an operational method will be described. Specifically, when the first sink device 10 fails to receive the ACL data packet and the second sink device 20 succeeds in snooping, the first sink device 10 may transmit a NACK message to the source device 1, so as the ACL data packet is retransmitted from the source device 1, the second sink device 20 may receive the same ACL data packet repeatedly. In this case, to explain the operational method of the second sink device 20, FIG. 10 illustrates a control block diagram of an earbud slave device according to an embodiment of the present disclosure, and FIG. 11 illustrates an operational method of an earbud slave device after determining duplicate reception of ACL data packets according to an embodiment of the present disclosure.

As shown in FIG. 10, the earbud slave according to an embodiment of the present disclosure, that is, the second sink device 20 may include at least part or all among a controller 21, a first media data determiner 21, and an upper layer transmission determiner 23, the duplicate reception determiner 25 and the flush reordering buffer determiner 27.

The controller 21 may control each of the first media data determiner 21, the upper layer transmission determiner 23, the duplicate reception determiner 25, and the flush reordering buffer determiner 27.

As shown in FIG. 11, when media data is received, the first media data determiner 21 may determine whether the received media data is the first data. Herein, the media data may be an ACL data packet, but is not limited thereto.

If the received media data is the first data is determined, the first media data determiner 21 may transmit the received media data to the upper layer transmission determiner 23 and wait for the next media data. On the other hand, if the received media data is not the first data is determined, the first media data determiner 21 may transmit the received media data to the duplicate reception determiner 25.

If the received media data is the same as previously received data or is the same as data currently stored in the reordering buffer is determined, the duplicate reception determiner 25 may discard the received media data. Meanwhile, if the received media data is not duplicate reception data is determined, the duplicate reception determiner 25 may transmit the received media data to the upper layer transmission determiner 23.

If the sequence number of the received media data is equal to the expected sequence number, the upper layer transmission determiner 23 may transmit the media data to the upper layer and increase a value of the expected sequence number by 1.

If the sequence number of the received media data is different from the expected sequence number, the upper layer transmission determiner 23 may transmit the corresponding layer to the flush reordering buffer determiner 27.

The flush reordering buffer determiner 27 may determine whether to perform a flush of the reordering buffer. The flush reordering buffer determiner 27 may determine whether to delete data stored in the reordering buffer.

The flush reordering buffer determiner 27 may determine whether the sequence number of the received media data matches all expected sequence numbers in the reordering buffer. The flush reordering buffer determiner 27 determines that the sequence number of the received media data does not match all expected sequence numbers in the reordering buffer, and the sequence number of the received media data is the maximum value of all expected sequence numbers in the reordering buffer is greater than, transmit all data in the reordering buffer to the upper layer, and increase the values of all expected sequence numbers in the reordering buffer by 1. The flush reordering buffer determiner 27 may store the received media data in the reordering buffer if the sequence number of the received media data matches at least one expected sequence number in the reordering buffer.

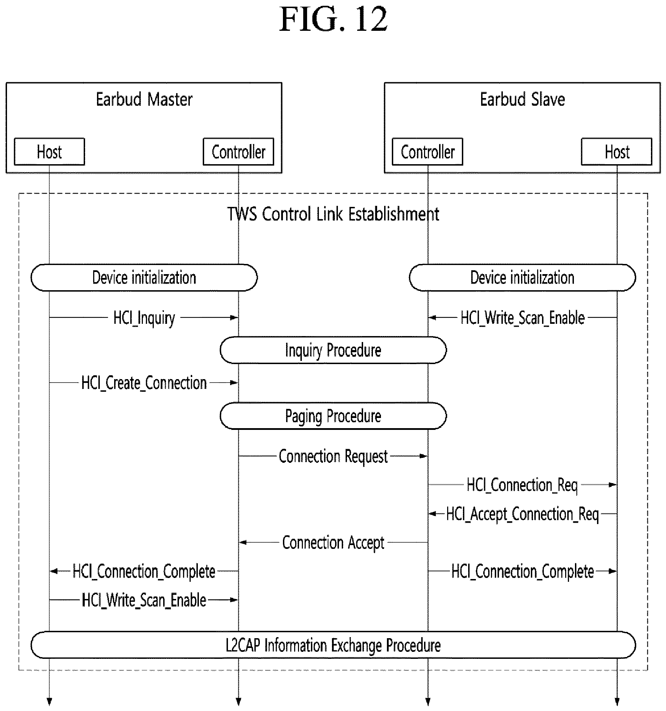

Next, FIG. 12 is a flowchart illustrating the process of forming a TWS control link between the master earbud and the slave earbud according to an embodiment of the present disclosure.

Referring to FIG. 12, a method of establishing a TWS control link between the first sink device 10, which is a master earbud, and the second sink device 20, which is a slave earbud, will be described.

The first sink device 10 may wait for a response from the second sink device 20 through the HCI_Inquiry command after the device initialization process. After a device is initialized, the second sink device 20 can enter an inquiry scan mode of the first sink device 10 through the HCI_Write_Scan_Enable command.

In inquiry scan mode, an inquiry and page scan can be enabled. In other words, page scan mode is immediately entered after the inquiry procedure.

An inquiry procedure is performed between the first sink device 10 and the second sink device 20, and the first sink device 10, which receives the inquiry response from the second sink device 20, may try to perform an ACL connection through the HCI_Create_Connect command. This may be the master earbud page scan mode.

A paging procedure is performed between the first sink device 10 and the second sink device 20, and the second sink device 20 sends a Connection Accept, which is sent to the first sink device 10. Once the first sink device 10 receives it, the TWS control link setup between the first sink device 10 and the second sink device 20 can be completed.

Afterwards, the first sink device 10 may enter the inquiry scan mode through the HCI_Write_Scan_Enable command for ACL connection with the source device 1, such as a smart phone.

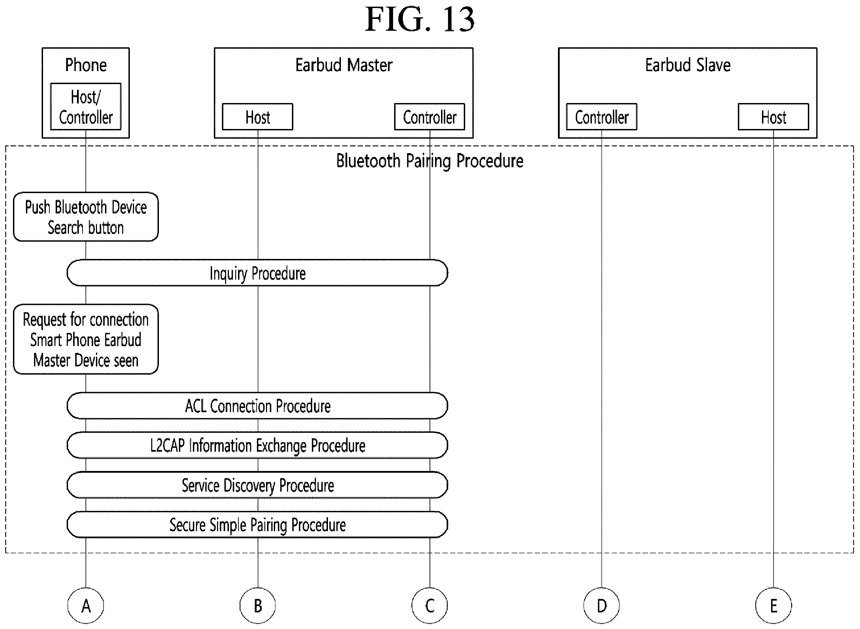

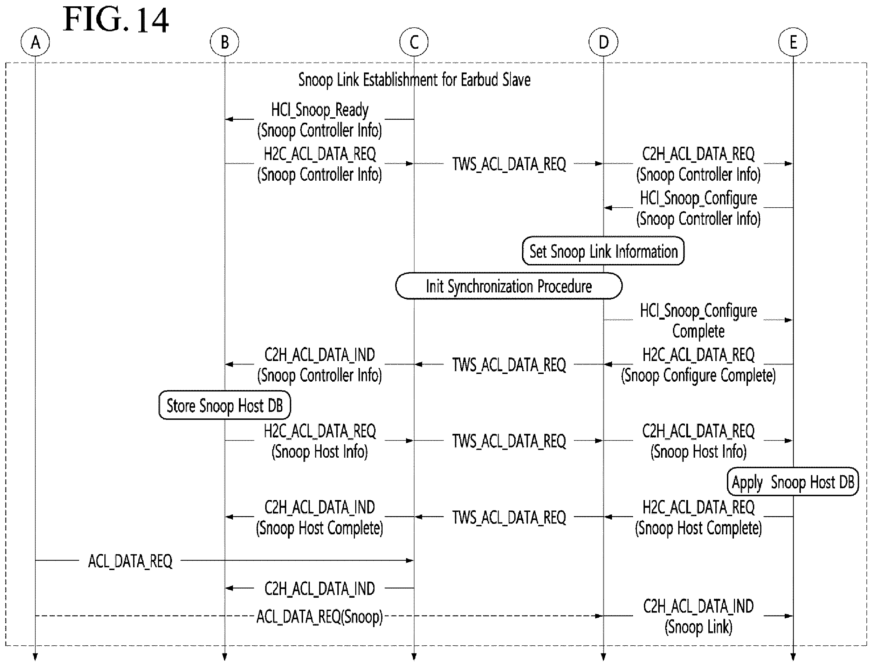

Next, FIGS. 13 and 14 are flowcharts illustrating a connection and information exchange method between earbuds according to an embodiment of the present disclosure.

The first sink device 10 may establish a TWS Snoop Link that allows the second sink device 20 to receive ACL data transmitted from the source device 1.

Referring to FIG. 12, first, the master earbud, that is, the first sink device 10, can perform a Bluetooth pairing procedure with the source device 1. When Secure Simple Pairing is completed in the first sink device 10 and Link Key generation is completed, HCI_Snoop_Ready (New) Event is transmitted to a host of the first sink device 10, and snooping link settings are possible to the second sink device 20 is notified. At this time, HCI_Snoop_Ready (New) Event may include controller information of the first sink device 10 for setting up a snooping link.

The host of the first sink device 10 can transmit snooping controller information through a TWS control link with the previously set second sink device 20. The host of the second sink device 20 may transmit the received snooping controller information to the controller of the second sink device 20 through the HCI_Snoop_Configure (New) command. The controller of the second sink device 20 may set the transmitted snooping controller information and complete the initial synchronization procedure.After completing the HCI_Snoop_Configure_Complete Event, the controller of the second sink device 20 may notify that the Controller Link setting has been completed through the HCI_Snoop_Configure_Complete Event. The host of the second sink device 20 may transmit that snooping controller configuration (Snoop Controller Configure) has been completed, to the host of the first sink device 10. The host of the first sink device 10 may store the host configuration information of the source device 1 and the first sink device 10 set so far and transmit it to the host of the second sink device 20. The host of the second sink device 20 may apply the host configuration information of the source device 1 and the first sink device 1. After sending Snoop Host Complete to the first sink device 10, the second sink device 20 may receive data transmitted by the source device 1 through a snoop link.

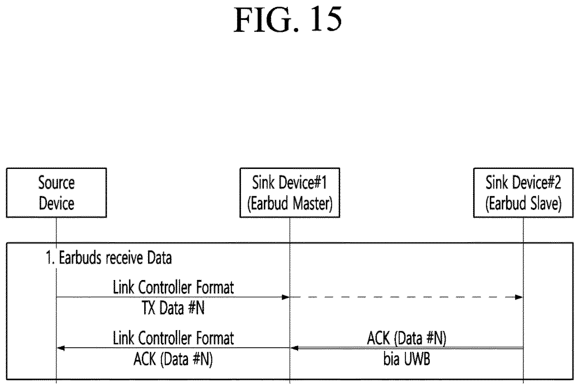

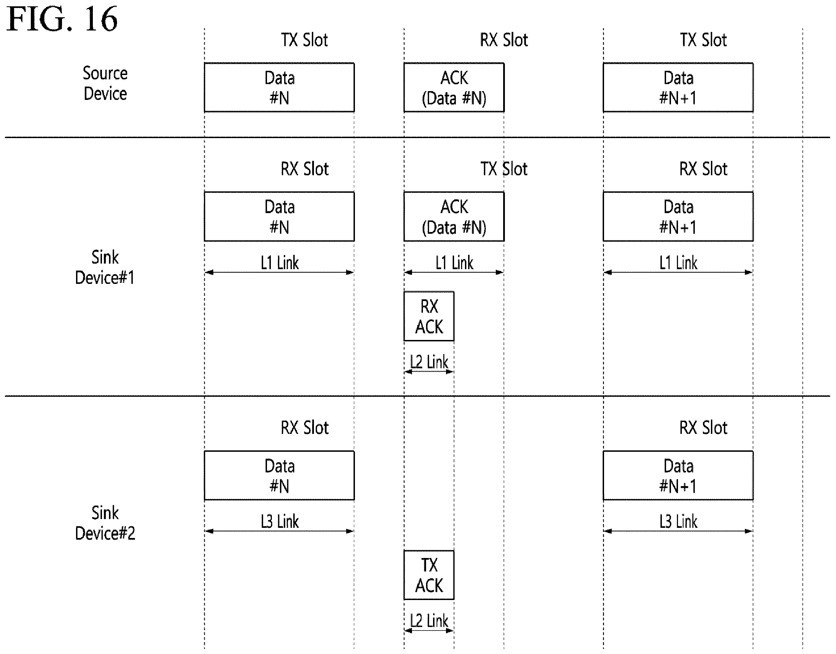

FIG. 15 is a flowchart illustrating a method of normally transmitting and receiving data using heterogeneous link technology in a wireless earbud system according to an embodiment of the present disclosure, and FIG. 16 is a data transmission/reception and Ack timing diagram according to FIG. 15.

So far, the process of establishing a TWS control link between the first sink device 10 and the second sink device 20 using Bluetooth has been explained. That is, the first sink device 10 can communicate with the source device 1 through Bluetooth, and the first sink device 10 can communicate with the second sink device 20 through Bluetooth.

FIGS. 15 and 16 illustrate the case of using UWB (Ultra Wide Band) rather than Bluetooth for the TWS control link. The first sink device 10 can communicate with the source device 1 via Bluetooth, and the first sink device 10 can communicate with the second sink device 20 via UWB.

The first sink device 10 may transmit a message about success/failure in receiving ACL data to the source device 1 through Bluetooth communication, and at the same time receive the message about snooping success/failure from the second sink device 20 to the second sink device 20.

Data and Ack transmitted using Bluetooth may be denoted as L1 link, and TWS control may be generated between the first sink device 10 and the second sink device 20 using UWB, a heterogeneous link technology, denoted as L2 link. The L3 link may be a link that snoops data from the source device 1.

When both the first sink device 10 and the second sink device 20 normally receive data from the source device 1, the first sink device 10 may transmit ACK to the source device 10 via the L1 link, which is a Bluetooth data link, and the second sink device 20 may notify that Data #N is normally received through the L2 link, which is a TWS Control Link, to the first sink device 10.

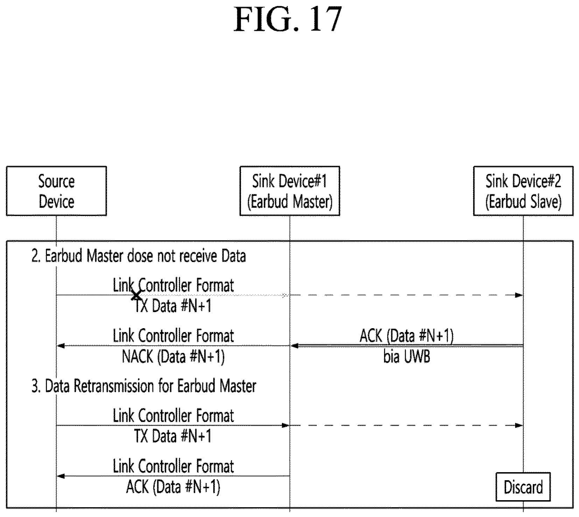

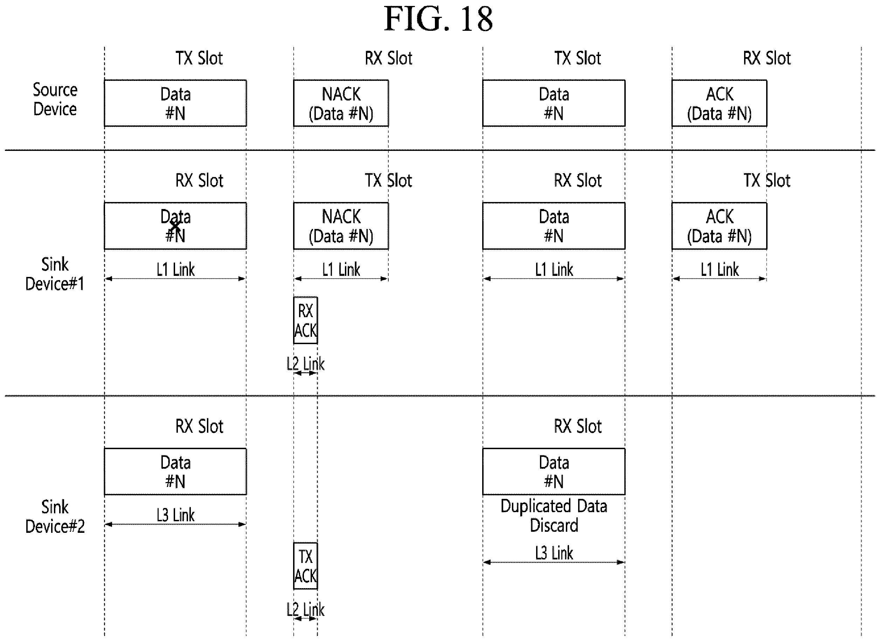

FIG. 17 is a flowchart illustrating a case where only the master earbud fails to receive data when utilizing heterogeneous link technology in a wireless earbud system according to an embodiment of the present disclosure, and FIG. 18 illustrates data transmission and reception and the Ack timing diagram according to FIG. 17.

The first sink device 10 may fail to receive data from the source device 1, and only the second sink device 20 may succeed in snooping on data transmitted from the source device 1. In this case, data from the source device 1 through a Bluetooth retransmission procedure can be retransmitted to the first sink device 10. If the second sink device 20 succeeds in snooping on data retransmitted from the source device 1, the corresponding data can be ignored.

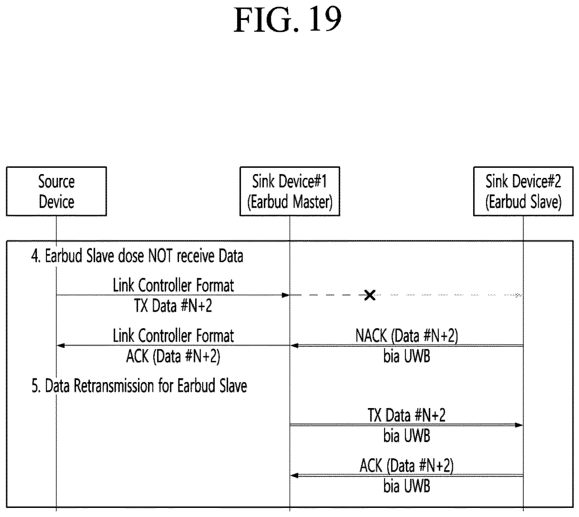

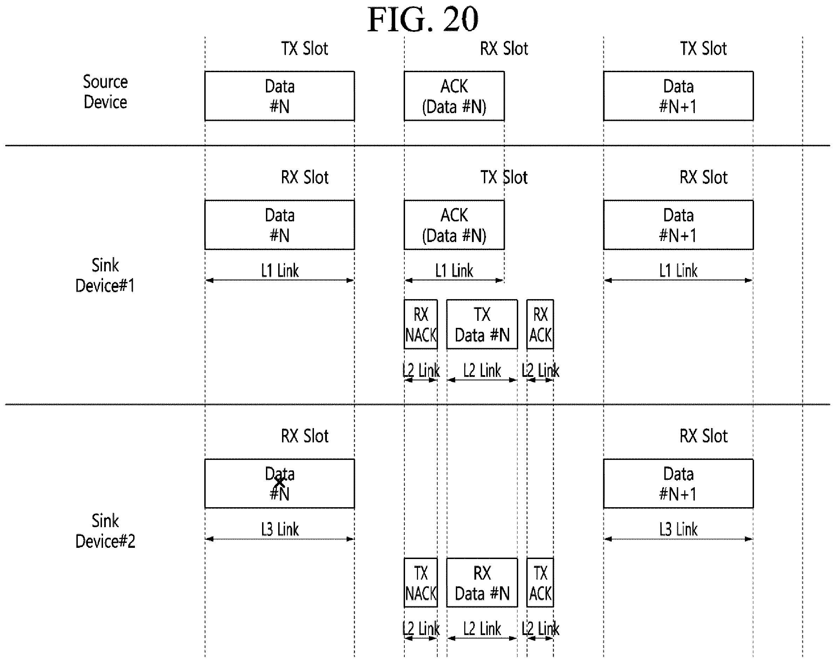

FIG. 19 is a flowchart illustrating a case where only the slave earbud fails to receive data when using heterogeneous link technology in a wireless earbud system according to an embodiment of the present disclosure, and FIG. 20 illustrates data transmission and reception and the Ack timing diagram according to FIG. 19.

The first sink device 10 may receive data, and only the second sink device 20 may not receive data. In this case, the second sink device 20 may transmit a Nack message to the first sink device 10 through the L2 link.

The first sink device 10 may notify the source device 1 of normal reception of its data through the L1 link and retransmit data based on the Nack information of the second sink device 20 received through the L2 link, that is, relay, can be performed. In this case, the number of relay attempts can be adjusted by setting the permission time for retransmission.

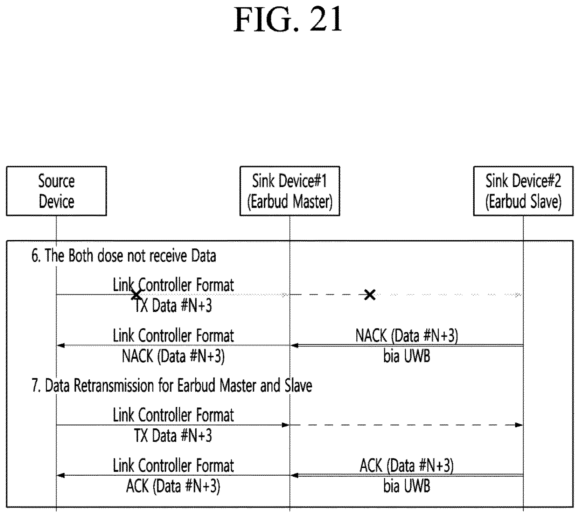

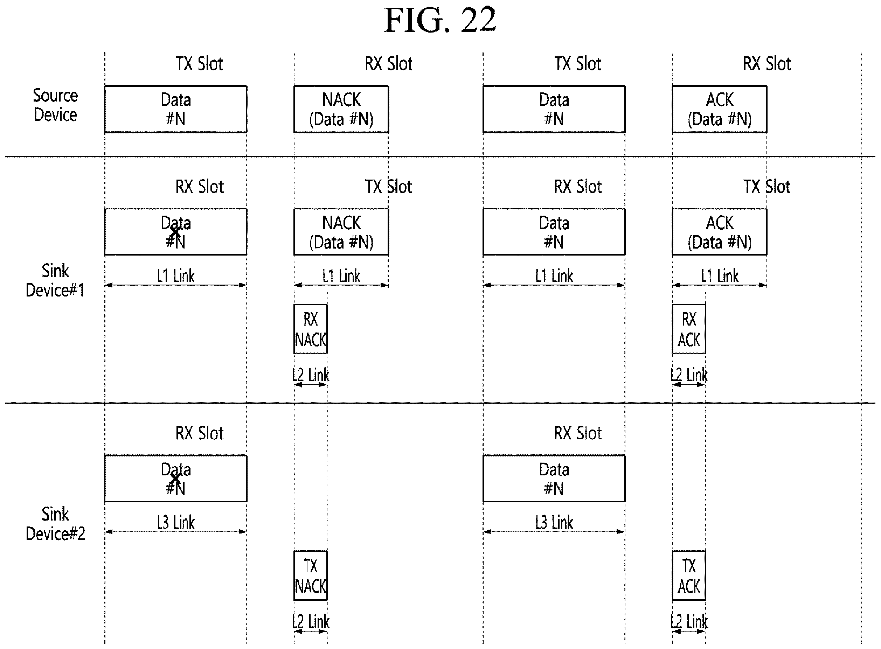

FIG. 21 is a flowchart illustrating a case where both the master earbud and the slave earbud fail to receive data when utilizing heterogeneous link technology in another wireless earbud system according to an embodiment of the present disclosure, and FIG. 22 is this diagram shows the data transmission/reception and Ack timing diagram according to FIG. 21.

If both the first sink device 10 and the second sink device 20 do not receive data, the first sink device 10 transmits a Nack message to the source device 1 through the L1 link. At the same time, a Nack message can be received from the second sink device through the L2 link. Therefore, in this case, when both the first sink device 10 and the second sink device 20 do not receive data, relay is not performed because the first sink device 10 also failed to receive data. Data can be recovered by retransmitting data by the source device 1.

Using heterogeneous link technology like this, ACK signals can be transmitted and received simultaneously, which has the advantage of minimizing latency problems.

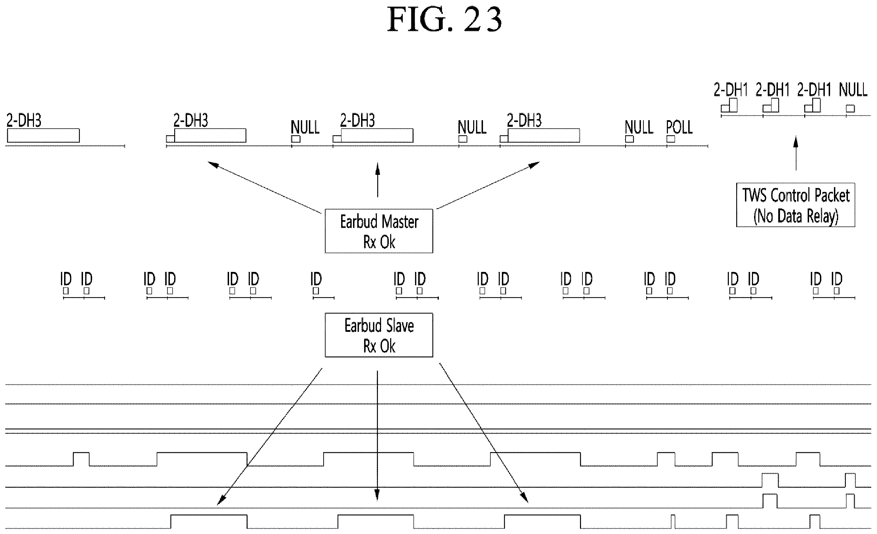

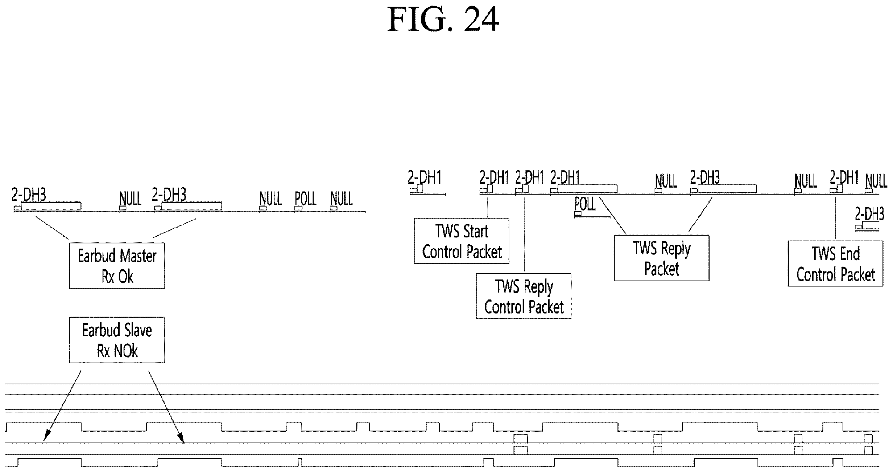

FIG. 23 is a diagram illustrating packet capture with an air sniffer device when data relay is not required in a wireless earbud system according to an embodiment of the present disclosure, and FIG. 24 illustrates packets captured with an air sniffer device when data relay is required in a wireless earbud system according to an example.

Referring to FIG. 23, since the master earbud receives data normally and the slave earbud also receives data normally, it can be confirmed that TWS control packets are transmitted and received without data relay.

Meanwhile, referring to FIG. 24, while the master earbud receives data normally, the slave earbud may not receive data. Accordingly, it can be confirmed that after the master earbud transmits the TWS start control packet, a TWS reply control packet is received, and at least one TWS relay control packet and a TWS end control packet are transmitted.

The present disclosure described above can be implemented as computer-readable code on a program-recorded medium. Computer-readable media includes all types of recording devices that store data that can be read by a computer system. Examples of computer-readable media include HDD (Hard Disk Drive), SSD (Solid State Disk), SDD (Silicon Disk Drive), ROM, RAM, CD-ROM, magnetic tape, floppy disk, optical data storage device, etc. Accordingly, the above-detailed description should not be construed as restrictive in all respects and should be considered illustrative. The scope of this specification should be determined by reasonable interpretation of the appended claims, and all changes within the equivalent scope of this specification are included in the scope of this specification.

The above description is merely an illustrative explanation of the technical idea of the present invention, and various modifications and variations can be made by those skilled in the art without departing from the essential characteristics of the present invention. will be.

Accordingly, the embodiments disclosed in the present invention are not intended to limit the technical idea of the present invention, but are for explaining, and the scope of the technical idea of the present invention is not limited by these embodiments.

The scope of protection of the present invention shall be interpreted in accordance with the claims below, and all technical ideas within the equivalent scope shall be construed as being included in the scope of rights of the present invention.

## Claims

1. A wireless earbud system, comprising:
a source device;
a first sink device configured to receive audio data from the source device; and
a second sink device configured to snoop audio data transmitted from the source device,
wherein the first sink device is configured to transmit relay packets to the second sink device to perform a data relay operation when there is data that fails to snoop in the second sink device.

2. The wireless earbud system of claim 1, wherein a control link for transmitting and receiving the relay packet between the first sink device and the second sink device is formed.

3. The wireless earbud system of claim 1, wherein the first sink device is configured to transmit a start control packet containing reception status information of ACL data received from the source device to the second sink device, and to receive a reply control packet containing reception status information of the ACL data snooped by the second sink device from the second sink device.

4. The wireless earbud system of claim 3, wherein the first sink device is configured to determine whether the data relay operation is necessary by comparing the ACL data received from the source device and the ACL data received by the second sink device through the reply control packet.

5. The wireless earbud system of claim 4, wherein, when the data relay operation is necessary, the first sink device is configured to transmit a relay packet carrying data that the second sink device is failed to snoop in an ACL data buffer to the second sink device.

6. The wireless earbud system of claim 1, wherein the first sink device is configured to transmit an end packet to the second sink device when the data relay operation is not necessary.

7. The wireless earbud system of claim 1, wherein the first sink device is configured to transmit an end packet to the second sink device when the data relay operation is completed.

8. The wireless earbud system of claim 1, wherein the relay packet is configured of a payload that the first sink device receives from the source device.

9. The wireless earbud system of claim 3, wherein an LLID value of the payload included in the start control packet is 0.

10. The wireless earbud system of claim 1, wherein the first sink device is configured to perform an ACL link operation to receive an ACL data packet transmitted from the source device during a predetermined period,
the second sink device is configured to perform the snooping link operation to receive the ACL data packet while the first sink device performs the the ACL link operation, and
the first sink device and the second sink device is configured to switch to a TWS control link operation when the reception operation for the ACL data packet is completed.

11. The wireless earbud system of claim 1, wherein the first sink device communicates with the source device through Bluetooth, and the first sink device communicates with the second sink device through Bluetooth.

12. The wireless earbud system of claim 1, wherein the first sink device communicates with the source device through Bluetooth, and the first sink device communicates with the second sink device through UWB.

13. The wireless earbud system of claim 12, wherein the first sink device is configured to transmit a message on the success/failure of receiving the ACL data to the source device through the Bluetooth communication, and to simultaneously transmit a message on the success/failure of snooping of the second sink device from the second sink device.

14. The wireless earbud system of claim 1, wherein the second sink device includes a first media data determiner configured to determine whether the received data is the first data, a duplicate reception determiner configured to determine whether the received data is the same as the previously received data or the received data is currently stored in a reordering buffer, when the received data is not the first data, an upper layer transmission determiner configured to transmit a sequence number of the received data to an upper layer by comparing with an expected sequence number, when the received data is the first data or is not duplicate received data, a flush reordering buffer determiner configured to transmit the sequence number of the received data to the upper layer by determining whether the sequence number of the received data matches all expected sequence numbers in the reordering buffer.

15. A method of operating in a wireless earbud system, comprising:
transmitting audio data from a source device to a first sink device;
receiving, by the first sink device, the audio data from the source device;
snooping, by a second sink device, audio data transmitted from the source device; and
transmitting, by the first sink device, a relay packet to the second sink device to perform a data relay operation when there is data that failed to snoop in the second sink device.
